# EUROPEAN PATENT APPLICATION

(11) **EP 2 622 993 A1**
(43) Date of publication of application: **07.08.2013**
(21) Application number: 12153699.9
(22) Date of filing: 02.02.2012
(51) Int. Cl.: A47G 7/08, A47F 7/00, B65D 85/50, A01G 5/00

(54) **A recipient for containing plants**

(71) Applicant: Floral bvba, 1840 Londerzeel (BE)
(72) Inventor: De Breucker, Tanja, 1840 Londerzeel (BE)
(74) Representative: BiiP cvba

(57) **Abstract**

The present invention is directed to a recipient for containing plants comprising a bottom part suitable for supporting a piece of floral foam, and an erect part connected to the bottom part, **characterized in that** that the erect part is sufficiently flexible for at least partial deformation after assembly of the recipient, and that the bottom part is sufficiently rigid to at least partially withstand deformation upon deformation of the erect part. In addition, the present invention is directed to a kit of parts for assembling such recipient.

## Description

### FIELD OF THE INVENTION

The present invention is related to a recipient for containing plants comprising a bottom part suitable for supporting a piece of floral foam and an erect part connected to the bottom part.

In addition the present invention is related to a kit of parts for assembling such recipient.

### BACKGROUND OF THE INVENTION

In floral design and in particular when making use of living plants and flowers, florists and floral design creators often make use of an extensive variety of recipients capable of holding floral foam.

A general problem however is that most conventional recipients, in particular recipients suitable for carrying floral foam, are made of quit rigid materials, e.g. rigid plastics, ceramics, or aluminum, which cannot easily be cut for adapting its shape, or perforated for fixing ornaments or additional decoration. It is clear that this restricts the florist's creativity, and significantly, often negatively, marks the final design of the creation.

On the contrary, other conventional recipients are made of flexible material, e.g. plastic foils or thin rubber sheets, which can indeed be easily shaped by cutting and perforating. However, they have the disadvantage that, upon deformation of the recipient during assembly of the floral design creation or upon manipulation of the recipient by a costumer, pressure is put on the water containing floral foam. Due to this pressure, water saturated cells of the foam will be squeezed and will release water, which decreases the storage time of the floral design creation and generates a risk of spilling (dirty) water on a costumer's clothes, or floor, etc.

Additionally, upon properly assembling a floral design creation, a florist or floral design creator will start the assembly by putting a piece of saturated (or at least sufficiently wet) floral foam into the recipient, and subsequently pushing the stems of the plants or flowers into the floral foam. A general problem doing so, is that upon pushing the stems in the floral foam, part of the water saturated cells in the floral foam will be compressed such that an amount of water will be released and flow into the recipient. It is obvious that a costumer carrying the assembled floral design creation has a risk of spilling water on his clothes, on the floor, etc.

Considering the drawbacks of conventional recipients, it is an object of the present invention to provide a recipient for containing plants allowing sufficient flexibility, deformation and shaping possibilities during design and development of creations not to restrict the florist's creativity, and not significantly marking and limiting design possibilities.

It is another object of the present invention to provide a recipient for containing plants that restricts or even minimizes pressure on the floral foam upon deformation of the recipient during assembly of the floral design creation or upon manipulation of the recipient by a costumer

Further it is an object of the present invention to provide a recipient for containing plants allowing longer storage time and freshness of the floral design creation.

It is also an object of the present invention to provide a recipient for containing plants minimizing the risk of spilling (dirty) water released from the floral foam, in particular in case a florist or floral design creator assembles his floral design creation by pushing the stems of the plants or flowers into the floral foam after the latter was placed in the recipient.

The present invention meets the above objects by proposing a recipient containing a bottom part suitable for supporting a piece of floral foam, and an erect part wherein the erect part is sufficiently flexible for at least partial deformation after assembly of the recipient, and wherein the bottom part is sufficiently rigid to at least partially withstand deformation upon deformation of the erect part.

### SUMMARY OF THE INVENTION

The present invention is directed to a recipient for containing plants comprising:
a. a bottom part suitable for supporting a piece of floral foam, and
b. an erect part connected to the bottom part
**characterized in that** the erect part is sufficiently flexible for at least partial deformation after assembly of the recipient, and that the bottom part is sufficiently rigid to at least partially withstand deformation upon deformation of the erect part.

In addition, the present invention is directed to a kit of parts for assembling a recipient for containing plants comprising:
a. a bottom part suitable for supporting a piece of floral foam, and
b. an erect part for connecting to the bottom part in erect position
**characterized in that** that the erect part is sufficiently flexible for at least partial deformation after assembly of the recipient, and that the bottom part is sufficiently rigid to at least partially withstand deformation upon deformation of the erect part.

### BRIEF DESCRIPTION OF THE DRAWINGS

FIG 1 illustrates an embodiment of a recipient in accordance with the present invention.
FIG 2 illustrates another embodiment of a recipient in accordance with the present invention.
FIG 3 illustrates a further embodiment of a recipient in accordance with the present invention.
FIG 4 illustrates an embodiment of a kit of parts in accordance with the present invention.

### DESCRIPTION OF THE INVENTION

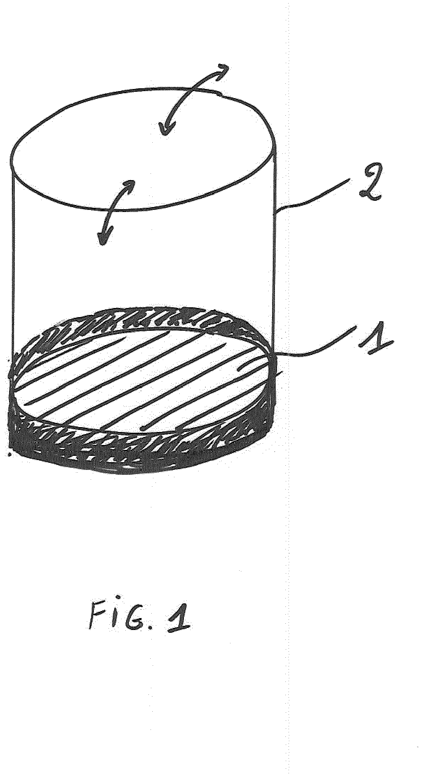

In a first embodiment and as illustrated in FIG 1, a recipient for containing plants is provided comprising:
a. a bottom part (1) suitable for supporting a piece of floral foam, and
b. an erect part (2) connected to the bottom part
**characterized in that** that the erect part is sufficiently flexible for at least partial deformation after assembly of the recipient, and that the bottom part is sufficiently rigid to at least partially withstand deformation upon deformation of the erect part.

By selecting sufficiently rigid materials for bottom part and sufficiently flexible materials for the erect part(s), the recipient of the present invention allows sufficient flexibility, deformation and shaping possibilities during design and development of creations not to restrict the florist's creativity. Consequently, the recipient may not anymore significantly marking and limiting design possibilities. Indeed, the florist or floral design creator may be able to cut, perforate, or bend or fold the erect part inwardly or outwardly without making collapsing or significantly deforming the bottom part.

Another advantage of proper materials selection is that, upon deformation of the erect part during assembly of the floral design creation or upon manipulation of the recipient by a costumer, pressure on the floral foam is restricted or even minimalized. Additionally, less pressure on the floral foam results in less water leakage into the recipient, less risk of spilling (dirty) water on the recipient's surroundings, and longer storage time and freshness of the floral design creation.

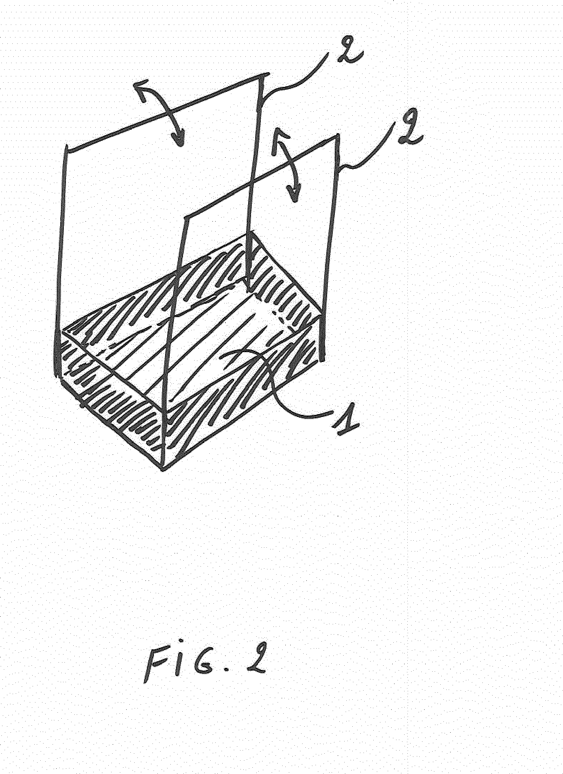

In an embodiment of the present invention, the recipient may comprise one erect part, two erect parts, preferably positioned at opposite sides of the bottom part (see FIG 2), or even three or four erected parts at different sides of the bottom part.

The one or more erect parts may comprise any sufficiently flexible and manually deformable, bendable, foldable, or shapeable polymer, such as flexible rubbers and flexible foams. Examples thereof are natural polyisoprene, synthetic polyisoprene, chloroprene rubber, polychloroprene, neoprene, Baypren, butyl rubbers, styrenebutadiene rubber, nitrile rubber, ethylene propylene rubber (EPM), ethylene propylene diene rubber (EPDM ), epichlorohydrin rubber (ECO), polyacrylic rubber (ACM, ABR), silicone rubber, fluorosilicone Rubber (FVMQ), fluoroelastomers (FKM, and FEPM) Viton, Tecnoflon, Fluorel, Aflas and Dai-El, perfluoroelastomers (FFKM) Tecnoflon PFR, Kalrez, Chemraz, Perlast, polyether block amides (PEBA), chlorosulfonated polyethylene (CSM), (Hypalon), ethylene-vinyl acetate (EVA), resilin, elastin, polysulfide rubber, etc.

The erect part(s) may have the form of a sheet. The thickness of the sheet may be selected such as to adapt the flexibility.

The erect part(s) may preferably be a closed cell polymer because of its low moisture absorbance.

In a preferred embodiment, the erect part(s) comprise closed cell EVA because of its low moisture absorbance, high chemical resistance (gluing) and high weather resistance, the latter being important upon using the recipient outdoors.

The bottom part may comprise any material that is sufficiently rigid for carrying, supporting, or partially enclosing a piece of floral foam, and to at least partially withstand deformation upon deformation of the erect part connected to it. Examples are any kind of metal, wood, sufficiently rigid plastics, sufficiently rigid paper board or sufficiently rigid polymer foams. Taking in account weight and gluing possibilities, preferably the bottom part is made of sufficiently rigid polymer foam such as polyethylene foam or polyurethane foam.

The bottom part may preferably be a (semi)-rigid closed cell polymer because of its low moisture absorbance.

In a preferred embodiment, the bottom part may comprise (semi-)rigid closed cell polyethylene foam because of its low weight, excellent buoyancy (important for use of the recipient in a floating floral design creation), impact absorption, and weather and chemical resistance.

The bottom part may have any form suitable for carrying, supporting, or partially enclosing a piece of floral foam, preferably having a recess in which a piece of floral foam fits.

The bottom part may be formed from a sheet of which the thickness may be selected such as to adapt the rigidity.

The erect part(s) may be connected to the bottom part by any method for fixing two different materials to each other, for example by gluing, stapling, lashing, etc...

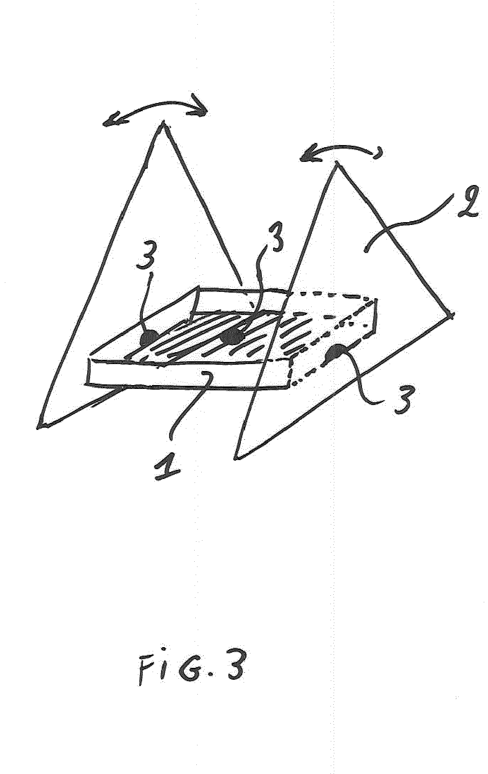

In an embodiment in accordance with the present invention and as illustrated in FIG 3, a recipient for containing plants is provided, comprising one or more holes (3) positioned such that water can leave the recipient in upright position. This has the advantage that, in case a florist or floral design creator assembles his floral design creation by pushing the stems of the plants or flowers into the floral foam after the latter was placed in the recipient, the water released from the floral foam can immediately leave the recipient, thereby decreasing the risk of spilling (dirty) water during further transport or use.

The one or more holes may be preferably provided in the bottom part, in the one or more erect parts - in this case preferably close to the bottom part - , or in both as illustrated in FIG 3.

Further the recipient may comprise a piece of floral foam fitting in the bottom part.

Additionally the recipient may also comprise a grip, or a shoulder strap, making it easily portable for use in portable floral design creations.

In addition, in another embodiment in accordance with the present invention a kit of parts is provided for assembling a recipient for containing plants comprising:
a. a bottom part suitable for supporting a piece of floral foam, and
b. an erect part for connecting to the bottom part in erect position
**characterized in that** that the erect part is sufficiently flexible for at least partial deformation after assembly of the recipient, and that the bottom part is sufficiently rigid to at least partially withstand deformation upon deformation of the erect part.

The advantage thereof is that, after connecting the bottom part and the erect part, the florist or floral design creator may still be able to cut, perforate, or bend or fold the erect part inwardly or outwardly without making collapsing or significantly deforming the bottom part.

The bottom part and erect part(s) may have characteristics and may be made of materials as described in the above embodiments.

The kit of parts may comprise one erect part, two erect parts, preferably for positioning at opposite sides of the bottom part, or even three or four erected parts at different sides of the bottom part.

The bottom part as provided in the kit of parts may be preformed, or may need some further shaping, e.g. by cutting or sawing.

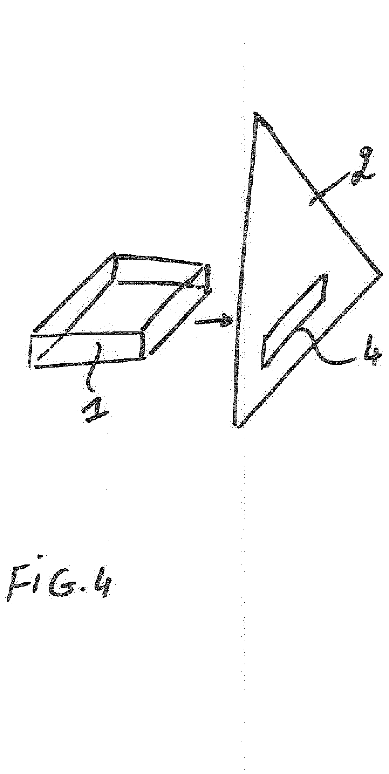

In a particular embodiment of a kit of parts according to the present invention and as illustrated in FIG 4, one or more erect parts (2) may comprise a sleeve (4) for receiving the bottom part (1). The advantage thereof is that the erect part(s) can be more easily positioned onto the bottom part. Preferably, for each erect part having such sleeve, a similarly shaped sheet without sleeve is provided for covering the sleeve from the outer sight.

Additionally the kit of parts may also comprise a grip, or a shoulder strap, for making the assembled recipient easily portable for use in portable floral design creations.

## Claims

1. A recipient for containing plants comprising:
a. a bottom part (1) suitable for supporting a piece of floral foam, and
b. an erect part (2) connected to the bottom part
**characterized in that** that the erect part is sufficiently flexible for at least partial deformation after assembly of the recipient, and that the bottom part is sufficiently rigid to at least partially withstand deformation upon deformation of the erect part.

2. A recipient according to claim 1, comprising two erect parts (2) positioned at opposite sides of the bottom part.

3. A recipient according to claims 1 or 2, wherein the one or more erect parts comprise a sufficiently flexible rubber or foam.

4. A recipient according to claim 3, wherein the one or more erect parts comprise closed cell ethylene-vinyl acetate foam.

5. A recipient according to claims 1 to 4, wherein the bottom part comprises closed cell polyethylene foam.

6. A recipient according to any of the above claims, comprising one or more holes (3) positioned such that water can leave the recipient in upright position.

7. A recipient according to claim 6, wherein the one or more holes are provided in the bottom part, in the one or more erect parts, or in both.

8. A recipient according to any of the above claims comprising a piece of floral foam fitting in the bottom part.

9. Use of a recipient according to any of the above claims in portable floral design creations.

10. A kit of parts for assembling a recipient for containing plants comprising:
a. a bottom part suitable for supporting a piece of floral foam, and
b. an erect part for connecting to the bottom part in erect position
**characterized in that** that the erect part is sufficiently flexible for at least partial deformation after assembly of the recipient, and that the bottom part is sufficiently rigid to at least partially withstand deformation upon deformation of the erect part.

11. A kit of parts according to claim 10, comprising two erect parts for positioning at opposite sides of the bottom part.

12. A kit of parts according to claims 10 or 11, wherein the one or more erect parts (2) comprise a sleeve (4) for receiving the bottom part (1).

13. Use of a kit of parts according to claim 10 to 12 in portable floral design creations.
